# EUROPEAN PATENT SPECIFICATION

(11) **EP 2 112 460 B1**
(45) Date of publication and mention of the grant of the patent: **16.05.2012**
(21) Application number: 09158364.1
(22) Date of filing: 21.04.2009
(51) Int. Cl.: G01B 5/008, G01B 7/008, G01B 11/00, G01B 21/04, B23Q 11/00, B25J 9/16, G05B 19/04

(54) **Form measuring apparatus**
Formmessvorrichtung
Appareil de mesure de forme

(30) Priority: 23.04.2008 JP 2008112911
(43) Date of publication of application: 28.10.2009
(73) Proprietor: Mitutoyo Corporation, Kawasaki-shi Kanagawa 213-0012 (JP)
(72) Inventor: Kamitani, Hiroshi, Utsunomiya-shi Tochigi (JP); Aoyagi, Shinichiro, Utsunomiya-shi Tochigi (JP); Terashita, Yo, Utsunomiya-shi Tochigi (JP)
(74) Representative: Skone James, Robert Edmund

(56) References cited:
- WO-A-2005/068138
- WO-A-2007/116624
- JP-A- 6 347 256
- US-A- 4 901 218

## Description

### Technical field

The present invention relates to a form measuring apparatus and, more particularly, a form measuring apparatus constructed such that two or more measuring machines equipped with a driving mechanism respectively are arranged opposedly to put a measured subject therebetween.

### Background Art

In the prior art, as the three-dimensional form measuring apparatus for measuring a form of a large measured subject such as a vehicle body at a high speed, the dual type form measuring apparatus in which two three-dimensional measuring machines are arranged opposedly to put a measured subject therebetween such that the measured subject can be measured simultaneously by using two measuring machines has been known. In the case of such type form measuring apparatus, the form measurement of the measured subject can be by two measuring machines, and therefore effective form measurement can be achieved (see Patent Literature 1, for example).

[Patent Literature 1] JP-A-6-347256

However, the conventional dual type form measuring apparatus is constructed such that the operation controller is connected to two three-dimensional measuring machines respectively and these operation controllers can operate only the corresponding three-dimensional measuring machine respectively. Therefore, the operator has to operate the three-dimensional form measuring machines by operating two operation controllers respectively. Also, two operation controllers are provided in a separate position respectively. Therefore, it is very difficult to operate effectively the three-dimensional form measuring apparatus constructed in this manner.

### Summary

The present invention has been made in view of the above problems, and it is an object of the present invention to provide a new form measuring apparatus having a high operability.

JP-A-6347256 discloses a form measuring apparatus comprising at least two measuring machines equipped with a driving mechanism respectively, and arranged opposedly to put a measured subject therebetween; and
at least two operation controllers connected to at least two measuring machines correspondingly respectively;
wherein each of the at least two operation controllers is enabled to operate each of the at least two measuring machines; and each controller operates the CMM, to which it is directly connected.
US-A-4901218 discloses another form measuring apparatus comprising two measuring machines with driving mechanisms. Since they cannot occupy the same space, they oppose each other and a measured subject can always be put in between. Each machine is connected to an operation controller.
Further examples are described in WO-A-2005/068138 and WO-A-2007/116624.
In accordance with the present invention, a form measuring apparatus comprises at least two measuring machines, each equipped with a driving mechanism and arranged oppositely to put a measured subject therebetween; at least two controlling units, each connected to one of the measuring machines; a cooperation-enabling means connecting the controlling units to each other, and is characterized in that the form measuring apparatus comprises at least two operation controllers each connected to one of the measuring machines via one of the controlling units, the operation controllers being adapted to perform manual operation of the measuring machines, each operation controller having a selector button capable of selecting one of the measuring machines as an operated subject by switching the selector button, and in the manual operation mode of the operation controllers, any one of the operation controllers operates a measuring machine connected to another of the operation controllers if the selector button of the one of the operation controllers is pushed, and any one of the operation controllers operates the measuring machine connected to itself if its selector button is not pushed.

In the form measuring apparatus according to the present invention, the operation controllers have selector buttons and are capable of selecting the measuring machine as an operated subject by switching the selector buttons.

According to the present invention, a new form measuring apparatus having a high operability can be provided.

### Brief description of the drawings

FIG. 1 is an external perspective view illustrating a schematic configuration of a form measuring apparatus according to an embodiment of the present invention.
FIG. 2 is a system conceptual view showing a system configuration of the form measuring apparatus according to the present embodiment shown in FIG. 1.
FlG. 3 is a flowchart explaining a concrete drive switching process of the form measuring apparatus according to the present embodiment.

### Detailed description

A referred embodiment of carrying out the present invention will be explained with reference to the drawings hereinafter. Here, the following embodiment should not be interpreted to restrict the invention according to respective claims, and all combinations of features explained in the embodiment are not always indispensable for the solving means of the present invention.

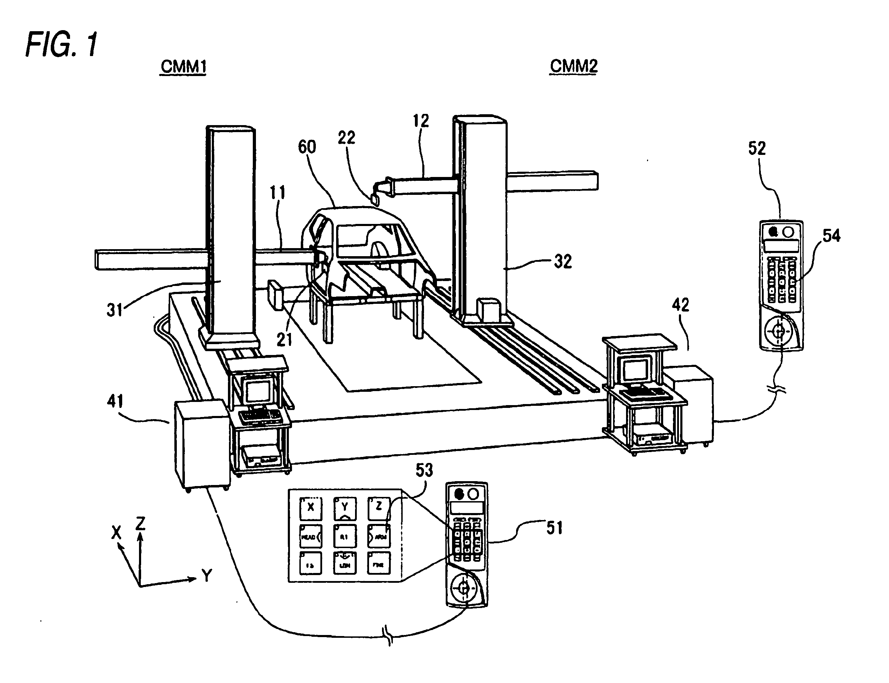

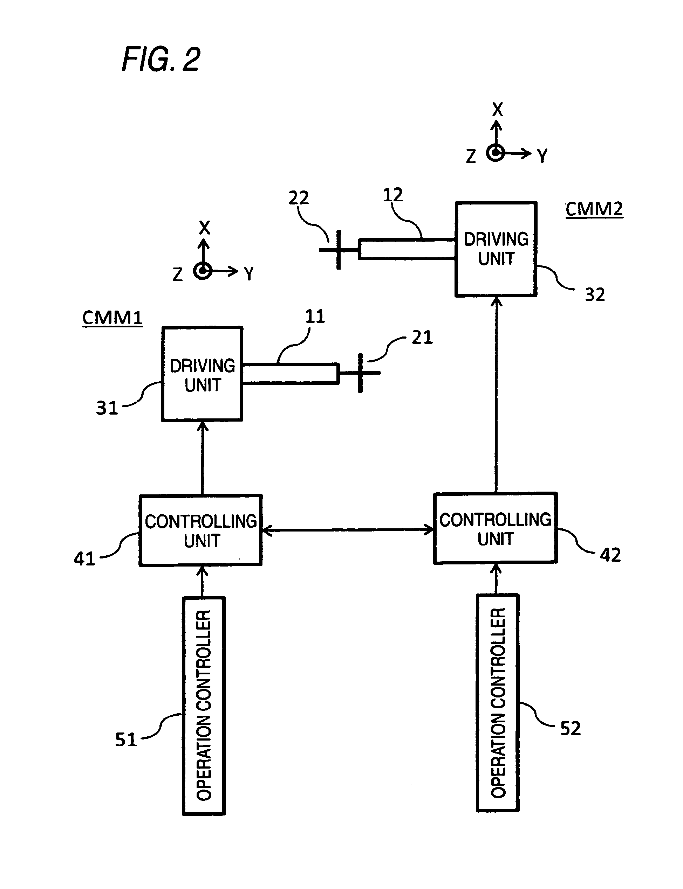

FIG. 1 is an external perspective view illustrating a schematic configuration of a form measuring apparatus according to the present embodiment. FIG. 2 is a system conceptual view showing a system configuration of the form measuring apparatus according to the present embodiment shown in FIG. 1.

As shown in FIG. 1 and FIG.2, the form measuring apparatus according to the present embodiment is equipped with two three-dimensional measuring machines CMM1, CMM2. Two three- dimensional measuring machines CMM1, CMM2 are constructed such that they are arranged opposedly to put a measured subject therebetween. Here, a spindle 11 and a measuring piece 21 fitted to its top end, a driving unit 31 for driving them, a controlling unit 41 for performing a moving control for measurement, and an operation controller 51 for manually operating the three-dimensional measuring machine CMM 1 via the controlling unit 41 are provided to one three-dimensional measuring machine CMM1. Similarly, a spindle 12 and a measuring piece 22 fitted to its top end, a driving unit 32 for driving them, a controlling unit 42 for performing a moving control for measurement, and an operation controller 52 for manually operating the three-dimensional measuring machine CMM2 via the controlling unit 42 are provided to the other three-dimensional measuring machine CMM2.

The controlling unit 41 connected to one three- dimensional measuring machine CMM1 and the controlling unit 42 connected to the other three-dimensional measuring machine CMM2 are connected by a cooperation-enabling means via cable or radio. When two controlling units 41, 42 are cooperated to perform the control, the whole operation control in the form measuring apparatus according to the present embodiment can be implemented.

Also, in order to make it possible for two three- dimensional measuring machines CMM1, CMM2 to perform the form measuring operation effectively in conjunction with each other, two controlling units 41, 42 execute the control in such a manner one three-dimensional measuring machine CMM1 is controlled as a main measuring machine that is operable on a priority basis whereas the other three-dimensional measuring machine CMM2 is controlled as a sub measuring machine whose operation is restricted depending upon an operation state of the main measuring machine. Since the control made by two three- dimensional measuring machines CMM1, CMM2 is set in this way, priority levels are specified between two three-dimensional measuring machines CMM1, CMM2, and an effective measuring operation can be realized.

In this case, as the measuring pieces 21, 22 fitted to the top ends of the spindles 11, 12, a contact type or a non-contact type may be provided. Concretely, all types such as touch probe, copying probe, laser probe, image probe, etc. may be employed.

The operation controller 51 connected to the controlling unit 41 and the operation controller 52 connected to the controlling unit 42 are designed such that normally the operation of the three-dimensional measuring machine CMM 1 is controlled by operating the operation controller 51, and the operation of the three-dimensional measuring machine CMM2 is controlled by operating the operation controller 52. In addition, selector buttons 53, 54 are provided to two operation controllers 51, 52 respectively. The measuring machines CMM1, CMM2 as the operated subject can be selected by switching the selector buttons 53, 54. In other words, the form measuring apparatus according to the present embodiment is constructed such that two operation controllers 51, 52 can operate all measuring machines containing the non-connected measuring machines respectively, so that the form measuring apparatus whose operability is very high for the apparatus operator can be provided.

The form measuring apparatus according to the present embodiment has the configuration mentioned above. Therefore, two three-dimensional measuring machines CMM1, CMM2 can be operated effectively, and the highly effective measuring operation can be done in respective directions of three axes X, Y, Z. Here, the form measuring apparatus according to the present embodiment can be constructed to have an automatic measuring function utilizing computer control and a manual measuring function executed by the operation controller using the joy stick, or the like. The present invention intends to make operations in the manual measurement using the operation controllers more efficient.

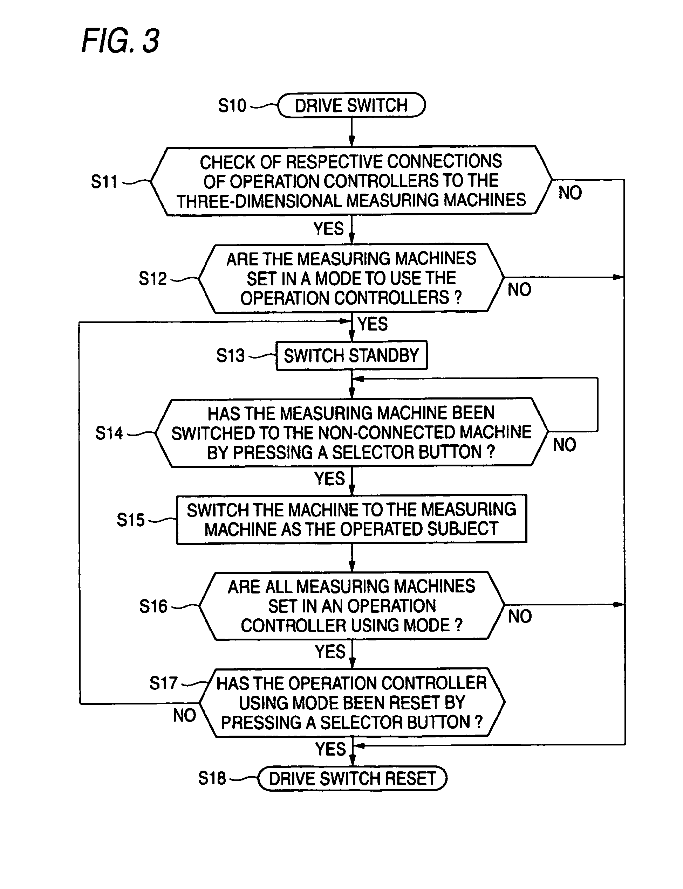

Next, concrete drive switching/resetting processes in the form measuring apparatus according to the present embodiment will be explained with reference FIG. 3 hereunder. In the case of a flowchart shown in FIG. 3, a concrete process flow applied when the operation controller 51 that is set normally to operate the three-dimensional measuring machine CMM 1 is switched to operate the three-dimensional measuring machine CMM2 and then such switching is reset and the operation controller 51 is set again to operate the three-dimensional measuring machine CMM1 is illustrated.

First, in a drive switching process started from step S10, a connection check to check whether or not two operation controllers 51, 52 are connected to two three-dimensional measuring machines CMM1, CMM2 respectively is conducted (step S11). If the operation controllers 51, 52 are not connected to the three-dimensional measuring machines CMM1, CMM2 respectively (step S11, NO), there is no necessity to do the drive switching process, and thus the present process is not executed and is disabled.

In step S11, if the check of respective connections of two operation controllers 51, 52 to the three-dimensional measuring machines CMM1, CMM2 is ended (step S11, YES), it is checked whether or not the three-dimensional measuring machines CMM1, CMM2 are set in a mode to use the operation controllers 51, 52 respectively (step S 12). At this time, if any one of the three-dimensional measuring machines CMM1, CMM2 is in an automatic measuring mode, for example (step S12, NO), that mode takes preference to the drive switching process, and thus the drive switching process is not executed.

In step S12, if it is checked that all three-dimensional measuring machines CMM1, CMM2 are set in the mode to use the operation controllers 51, 52 respectively (step S12, YES), a switch standby command is issued (step S13). Thus, such a situation is set that, when the selector button 53 provided to the operation controller 51 is pressed, the operable measuring machine can be changed from the three-dimensional measuring machine CMM1 to the three-dimensional measuring machine CMM2.

At this stage, when the operator wishes to operate the three-dimensional measuring machine CMM1, as usual, by using the operation controller 51, this operator may still operate the operation controller 51. Therefore, the drive switching process shown in FIG. 3 repeats a loop state in step S14.

In contrast, when the operator decides that he or she wishes to operate the three-dimensional measuring machine CMM2 by using the operation controller 51, the three-dimensional measuring machine CMM2 is switched to the operable state by pressing the selector button 53 provided to the operation controller 51 (step S14). Then, the switching of the measuring machine as the operated subject is executed (step S15).

After this, the switching of the measuring machine as the operated subject can also be executed by pressing the selector button 53 provided to the operation controller 51, so that the operator can select easily the desired measuring machine as the operated subject (step S 17).

Here, the present process is an enable process only when all three-dimensional measuring machines CMM1, CMM2 are set in the mode to use the operation controllers 51, 52 respectively. Therefore, when the mode to use the operation controllers 51, 52 is rest in the middle of process (step S16, NO), the present drive switching process is reset forcedly (step S18). Of course, the operator can end the present drive switching process at operator's will, and that ending process can be done by pressing the selector buttons 53, 54 (step S17, step S 18).

The algorithm explained above and shown in FIG. 3 enables one operation controller to operate a plurality of three- dimensional measuring machines CMM1, CMM2. Therefore, the form measuring apparatus whose operability by an operator can be great improved can be obtained.

With the above, the preferred embodiment of the present invention is explained, but the technical scope of the present invention is not limited to a range set forth in the above embodiment. Various variations or improvements can be applied to the above embodiment. For example, the case where the above form measuring apparatus according to the present embodiment is equipped with two three-dimensional measuring machines CMM1, CMM2 is explained in by way of example. However, the drive switching process by the operation controllers of the present invention can be applied even when three or more three-dimensional measuring machines are provided. It is apparent from the recitation of claims that such varied or improved modes can be contained in the technical scope of the present invention.

## Claims

1. A form measuring apparatus, comprising:
at least two measuring machines, each equipped with a driving mechanism (31,32) and arranged oppositely to put a measured subject therebetween;
at least two controlling units (41,42), each connected to one of the measuring machines;
a cooperation-enabling means connecting the controlling units (41,42) to each other,
**characterized in that**
the form measuring apparatus comprises at least two operation controllers (51,52) each connected to one of the measuring machines via one of the controlling units (41,42), the operation controllers (51,52) being adapted to perform manual operation of the measuring machines,
each operation controller (51,52) having a selector button (53,54) capable of selecting one of the measuring machines as an operated subject by switching the selector button (53,54), and
in the manual operation mode of the operation controllers (51,52), any one (51 or 52) of the operation controllers (51,52) operates a measuring machine connected to another (52 or 51) of the operation controllers (51,52) if the selector button (53 or 54) of the one (51 or 52) of the operation controllers (51,52) is pushed,
and any one (51 or 52) of the operation controllers (51,52) operates the measuring machine connected to itself (52 or 51) if its selector button (53 or 54) is not pushed.

## Patentansprüche

1. Formmessvorrichtung, enthaltend:
wenigstens zwei Messmaschinen, die jeweils mit einem Antriebsmechanismus (31, 32) ausgestattet und gegenüberliegend angeordnet sind, um zwischen sich einen zu messenden Gegenstand aufzunehmen;
wenigstens zwei Steuereinheiten (41, 42), die jeweils mit einer der Messmaschinen verbunden sind; und
eine Zusammenwirkungs-Inkraftsetzeinrichtung, die die Steuereinheiten (41, 42) miteinander verbindet,
**dadurch gekennzeichnet, dass**
die Formmessvorrichtung wenigstens zwei Betätigungssteuereinheiten (51, 52) enthält, die jeweils mit einer der Messmaschinen über eine der Steuereinheiten (41, 42) verbunden sind, wobei die Betätigungssteuereinheiten (51, 52) dazu eingerichtet sind, eine manuelle Betätigung der Messmaschinen auszuführen,
jede Betätigungssteuereinheit (51, 52) eine Wähltaste (53, 54) hat, die in der Lage ist, eine der Messmaschinen als einen betätigten Gegenstand durch Umschalten der Wähltaste (53, 54) zu wählen, und
in der manuellen Betriebsart der Betätigungssteuereinheiten (51, 52) eine beliebige (51 oder 52) der Betätigungssteuereinheiten (51, 52) eine Messmaschine, die mit der anderen (52 oder 51) der Betätigungsteuereinheiten (51, 52) verbunden ist, betätigt, sofern die Wähltaste (53 oder 54) der einen (51 oder 52) der Betätigungssteuereinheiten (51, 52) gedrückt wird,
und eine beliebige (51 oder 52) der Betätigungssteuereinheiten (51, 52) die Messmaschine betätigt, die mit ihr selbst (52 oder 51) verbunden ist, sofern ihre Wähltaste (53 oder 54) nicht gedrückt ist.

## Revendications

1. Appareil de mesure de forme, comprenant :
au moins deux machines de mesure, équipées chacune d'un mécanisme d'entraînement (31, 32) et agencées face à face pour placer un sujet mesuré entre elles ;
au moins deux unités de commande (41, 42), connectées chacune à l'une des machines de mesure ;
des moyens permettant une coopération connectant les unités de commande (41, 42) l'une à l'autre,
**caractérisé en ce que**
l'appareil de mesure de forme comprend au moins deux contrôleurs de fonctionnement (51, 52) connectés chacun à l'une des machines de mesure par l'intermédiaire de l'une des unités de commande (41, 42), les contrôleurs de fonctionnement (51, 52) étant conçus pour effectuer une commande manuelle des machines de mesure,
chaque contrôleur de fonctionnement (51, 52) comportant un bouton de sélection (53, 54) permettant de sélectionner l'une des machines de mesure en tant que sujet mis en oeuvre en commutant le bouton de sélection (53, 54), et
dans le mode de commande manuelle des contrôleurs de fonctionnement (51, 52), l'un quelconque (51 ou 52) des contrôleurs de fonctionnement (51, 52) met en oeuvre une machine de mesure connectée à un autre (52 ou 51) des contrôleurs de fonctionnement (51, 52) si le bouton de sélection (53 ou 54) dudit un (51 ou 52) des contrôleurs de fonctionnement (51, 52) est poussé,
et l'un quelconque (51 ou 52) des contrôleurs de fonctionnement (51, 52) met en oeuvre la machine de mesure connectée à lui-même (52 ou 51) si son bouton de sélection (53 ou 54) n'est pas poussé.
